# EUROPEAN PATENT APPLICATION

(11) **EP 1 870 187 A1**
(43) Date of publication of application: **26.12.2007**
(21) Application number: 07252387.1
(22) Date of filing: 13.06.2007
(51) Int. Cl.: B23D 51/01, B23D 49/16

(54) **Jigsaw**

(30) Priority: 19.06.2006 CN 200610094431
(71) Applicant: Positec Power Tools (Suzhou) Co., Ltd., Suzhou 215006 (CN)
(72) Inventor: Zhang, Shisong, Suzhou 215006 (CN); Xiangqing, Li. c/o Positec Power Tools(Suzhou)Co.Ltd., Suzhou 215006 (CN)
(74) Representative: Stuttard, Garry Philip

(57) **Abstract**

The present invention relates to jigsaw (100,100',400) with a rotatable handle and a saw blade (1) for working on a work piece. A motor (2) is received in a first housing (4,4',402) for driving the saw blade (1). A transmission mechanism (3) is provided for transferring energy from the motor (2) to the saw blade (1). The transmission mechanism (3) is received in a second housing (5,412). There is also provided a handle assembly (6,6',422) for moving the jigsaw (100,100',400) relative to the work piece. The handle assembly (6,6',422) is supported on one of the first housing (4,4',402) or the second housing (5,412). The handle assembly (6,6',422) is rotatably movable relative to at least one of the first and second housing; The jigsaw (100,100',400) has a small volume and it can provide accurate bevel cutting.

## Description

The present invention relates to a jigsaw, more particularly to a jigsaw having a rotatable handle assembly.

A commercially available jigsaw comprises a handle secured to a motor housing. During operation (eg during bevel cutting), the handle and the housing are tilted and the operator grasps the tilted handle to move the jigsaw along the work piece. A continuous force must be applied to the handle which will affect the cutting precision.

JP7-171802 discloses a jigsaw for bevel cutting a work piece which comprises a main body and a support shoe. During bevel cutting, the main body can be rotated relative to the support shoe and fixed at a tilted orientation so that the handle can be rotated around the main body and back to the vertical position or another desired position. However the handle disclosed in JP7-171802 extends entirely across the main body and is connected at each end thereof. The main body houses the motor and the transmission mechanism. This arrangement means that the length of the handle in the longitudinal direction is greater than the length of the motor housing plus the length of the transmission mechanism. Furthermore the handle needs to extend across the transmission device. Generally the transmission mechanism is relatively large so the handle must be relatively high so that the volume of the jigsaw will be very large. Each end of the handle is connected to an end of the main body by a nut and bolt which to a certain extent is unreliable. When the handle is rotated, the operator must loosen the nut and rotate the handle to a desired position and then fix the nut which makes operation complex and time consuming.

US2007/0050993 disloses a jigsaw with a rotary handle coupled to the end of the motor housing.

The present invention seeks to improve the versatility of a jigsaw (for example to provide precise bevel cutting) by providing a compact handle rotatable reliably over a relatively long period of time which can be fixed rapidly in a desired rotational position.

Thus viewed from a first aspect the present invention provides a jigsaw comprising:
a first housing for receiving a motor, wherein the motor has a rotary axis (X),
a second housing for receiving a transmission mechanism capable of transferring energy from the motor to a saw blade, wherein the second housing is attached to or integral with the first housing;
a support shoe attached or coupled to the first and/or second housing for supporting the jigsaw on or against a workpiece;
a bracket assembly pivotally coupled to either or both of the first housing or second housing such that either or both of the first housing or second housing is pivotal relative to the support shoe about an inclination axis (Z) coincident with or parallel to the rotary axis (X) whereby to incline the second housing relative to the support shoe at an inclined position, wherein the bracket assembly is adapted to arrest the second housing at the inclined position; and
a handle assembly for moving the jigsaw relative to a work piece, wherein the handle assembly is integral with or radially mounted on one of the first housing and the second housing and is selectively rotatable relative to at least one of the first housing and the second housing.

The present invention permits the handle assembly to be rotated and secured conveniently and at a desired position relatively quickly.

In an embodiment, the jigsaw comprises a saw blade for working on a work piece, a motor for driving the saw blade which is received in a first housing, a transmission mechanism received in a second housing for transferring power from the motor to the saw blade and a handle assembly for moving the jigsaw relative to the work piece. The handle assembly may be supported on the first housing. The handle assembly may rotate relative to at least one of the first housing or the second housing.

The motor is typically powered by a power source and the jigsaw comprises power cabling connected to its proximal end. The saw blade may be downwardly dependent from the second housing (eg at or near to the distal end of the jigsaw).

At or near to the distal end of the jigsaw may be mounted a support shoe for supporting the jigsaw on or against the workpiece. Typically the support shoe is attached or coupled to the first and/or second housing. The support shoe may be pivotally coupled to the first housing by a pivotal bracket assembly. The saw blade may pass through the support shoe.

In a preferred embodiment, the support shoe is pivotal relative to the first housing about an axis coincident with or parallel to the rotary axis. In this embodiment, the saw blade may be inclined relative to the support shoe to permit bevel cutting.

The first housing is typically elongate in the longitudinal (cutting) direction. The second housing is typically elongate in a direction perpendicular to the longitudinal (cutting) direction. The first housing is typically proximate the second housing. The first and second housing together may be substantially L-shaped.

The handle assembly may be rotatable relative to the first housing and the second housing. Alternatively the first housing and the handle assembly may be monolithic and rotatable together relative to the second housing.

The handle assembly may be positioned entirely on the first housing or between the first housing and the second housing.

The handle assembly may comprise a gripping portion and a connecting portion. The connecting portion may be substantially cylindrical. The connecting portion may mate with at least a part of the first housing. In a preferred embodiment of the invention, the cross section of the connecting portion of the handle is substantially annular. This improves reliability and operational stability whilst permitting precise cutting.

The inner height of the handle may be less than or equal to the height of the second housing.

To prevent the connecting portion from interfering with the bracket assembly, the connecting portion may be short and it may terminate near the bracket assembly. For example, the connecting portion may incorporate a cut-away part.

In an embodiment of the present invention, the handle assembly is radially mounted only on the first housing (ie does not extend across the second housing). The second housing receives the transmission mechanism so the volume of the second housing is usually much greater than that of the first housing. Where the handle assembly is mounted only on the first housing, it can be relatively short and small and so the jigsaw has a relatively compact construction and a low volume.

The jigsaw may have a coupling mechanism for coupling the handle assembly to the first housing. The coupling mechanism may comprise a first connecting sleeve and a second connecting sleeve. The first and the second connecting sleeve may be a tight fit on the first housing. The first and the second connecting sleeve may be integral with the first housing.

The first connecting sleeve may comprise a plurality of recesses (typically at a proximal end). The connecting portion of the handle may have a plurality of (eg two) protrusions (eg on an internal wall). The handle assembly may be selectively rotated to a pre-determined position at which the handle assembly is fixed relative to the first and second housing by inserting a protrusion into one of the recesses. Preferably the five predetermined positions at which the handle assembly is fixed relative to the first and second housing are at 0, 5, 30, 45, and 50 degrees respectively. An elastic member may be positioned in contact with the second connecting sleeve to bias the protrusion into the recess. The protrusion may be selectively disengaged from the recess by causing the elastic member to compress so that the handle assembly can be freely rotated.

Preferably the longest dimension of the handle assembly in the longitudinal direction is less than the longest dimension of the first housing in the longitudinal direction.

Preferably the handle assembly is rotatable around the rotary axis (X) or an axis (Y) which is substantially parallel to the rotary axis (X).

Preferably the handle assembly is integral with the first housing, wherein the handle assembly along with the first housing is rotatable relative to the second housing.

Preferably the handle assembly is coupled to the first housing by a coupling mechanism, wherein the handle assembly is selectively rotatable relative to the first housing.

Preferably the coupling mechanism has a fixing device for fixing the handle assembly relative to the first housing.

In a preferred embodiment, the handle assembly is axially retractable to disengage the coupling mechanism and the handle assembly to permit the handle assembly to be rotatable relative to the first housing.

Particularly preferably the handle assembly comprises a gripping portion and a connecting portion coupled to the first housing. Preferably the gripping portion is D-shaped or L-shaped.

Particularly preferably the cross section of the connecting portion is arcuate and the inner surface of the connecting portion and the outer surface of the first housing at least partially match.

Particularly preferably the coupling mechanism comprises:
a first connecting sleeve radially mounted on the first housing adjacent to the second housing and
a second connecting sleeve radially mounted on the first housing remote from the second housing, wherein the handle assembly comprises:
   a gripping portion and
   a connecting portion, wherein the connecting portion is a hollow cylinder, wherein the inner surface of the hollow cylinder matches the outer surface of the first and second connecting sleeve such that the handle assembly is selectively moveable relative to the first and second connecting sleeve.

Particularly preferably the first connecting sleeve and the second connecting sleeve are integral with the first housing.

Particuarly preferably the first connecting sleeve and the second connecting sleeve are discrete from and radially mounted on the first housing.

Particularly preferably the fixing device comprises a plurality of recesses on the first connecting sleeve and a protrusion on the inner surface of the hollow cylinder which selectively engages a recess of the plurality of recesses for fixing the handle assembly relative to the first housing.

In a particularly preferred embodiment, a part circumferential flange is formed on the inner surface of the hollow cylinder and the coupling mechanism further comprises:
a ring adjacent to a distal end of the second connecting sleeve, wherein a distal face of the ring engages the flange,
an elastic member (eg one or more springs) mounted on the second connecting sleeve which abuts a proximal face of the ring.

The outer diameter of the ring may be less than or equal to the outer diameter of the first and second connecting sleeve.

In an embodiment of the present invention, the handle assembly is radially mounted on the second housing (eg at a proximal end of the second housing). Typically the handle assembly has a first end radially mounted on the second housing and a free second end.

Preferably the first housing has a distal end and a proximal end; wherein the second housing is firmly attached to the distal end of the first housing, and
wherein the handle assembly has a hand grip and a rotation ring attached to or integral with the hand grip, wherein the jigsaw further comprises:
a coupling device for rotatably coupling the handle assembly to the second housing adjacent to the distal end of the first housing whereby the handle assembly is capable of being selectively rotated around a handle rotational axis (Y) with respect to the first housing and to the second housing.

Particularly preferably the handle rotational axis (Y) is parallel to or coincident with the rotary axis (X).

Particularly preferably the first housing comprises a first and second shell attached to each other.

Particularly preferably the coupling device comprises a securing device for arresting the handle assembly in a selected rotational position with respect to the handle rotational axis (Y). Preferably the securing device comprises a control lever having a cam surface.

The motor may be an electric motor or a pneumatic motor.

In a preferred embodiment, the first housing and handle assembly are integral and the first housing is slidably mounted radially on the second housing, wherein in use the first housing and handle assembly are selectively rotational relative to the second housing.

The second housing may be slidably mounted radially on a distal end of the first housing. For example, a collar flange may be formed on an inner wall at the distal end of the first housing, wherein the collar flange is slidably engageable with an annular lip formed on the proximal end of the second housing.

Viewed from a further aspect the present invention provides a jigsaw comprising:
a first housing for receiving a motor, wherein the motor has a rotary axis,
a second housing for receiving a transmission mechanism capable of transferring energy from the motor to a saw blade, wherein the second housing is attached to or integral with the first housing;
a support shoe attached or coupled to the first and/or second housing for supporting the jigsaw on or against a workpiece;
a bracket assembly pivotally coupled to either or both of the first housing or second housing such that either or both of the first housing or second housing is pivotal relative to the support shoe about an inclination axis (Z) coincident with or parallel to the rotary axis (X) whereby to incline the second housing relative to the support shoe at an inclined position, wherein the bracket assembly is adapted to arrest the second housing at the inclined position; and
a handle assembly for moving the jigsaw relative to a work piece, wherein the handle assembly has a first end and a second end,
wherein the first end and the second end of the handle assembly are mounted on the first housing and the handle assembly is selectively rotatable relative to at least one of the first housing and the second housing.

Viewed from a yet still further aspect the present invention provides a jigsaw comprising:
a first housing for receiving a motor, wherein the motor has a rotary axis (X),
a second housing for receiving a transmission mechanism capable of transferring energy from the motor to a saw blade, wherein the second housing is attached to or integral with the first housing;
a support shoe attached or coupled to the first and/or second housing for supporting the jigsaw on or against a workpiece;
a bracket assembly pivotally coupled to either or both of the first housing or second housing such that either or both of the first housing or second housing is pivotal relative to the support shoe about an inclination axis (Z) coincident with or parallel to the rotary axis (X) whereby to incline the second housing relative to the support shoe at an inclined position, wherein the bracket assembly is adapted to arrest the second housing at the inclined position; and
a handle assembly for moving the jigsaw relative to a work piece, wherein the handle assembly has a first end and a second end;
wherein the first end of the handle assembly is supported on one of the first housing or the second housing the second end of the handle assembly is a free end and wherein the handle assembly is selectively rotatable relative to at least one of the first housing and the second housing.

The present invention will now be described in a non-limitative sense with reference to the accompanying Figures in which:
Figure 1 is a perspective view of a first embodiment of the jigsaw of the present invention;
Figure 2 is a side elevational view of A jigsaw as claimed in Figure 1;
Figure 3 is an exploded perspective view of A jigsaw as claimed in Figure 1;
Figure 4 is a partial perspective view of A jigsaw as claimed in Figure 1;
Figure 5 is a front view of A jigsaw as claimed in Figure 1 in a first working position;
Figure 6 is a front view of A jigsaw as claimed in Figure 1 in a second working position;
Figure 7 is a side elevational view of a second embodiment of the jigsaw of the present invention;
Figure 8 is a rear view of A jigsaw as claimed in Figure 7 in a first working position;
Figure 9 is a rear view of A jigsaw as claimed in Figure 7 in a second working position;
Figure 10 is front view of a third embodiment of the jigsaw of the present invention;
Figure 11 is a partial sectional view of the jigsaw in Figure 10; and
Figure 12 is an enlarged sectional view along the line A-A of Figure 11.

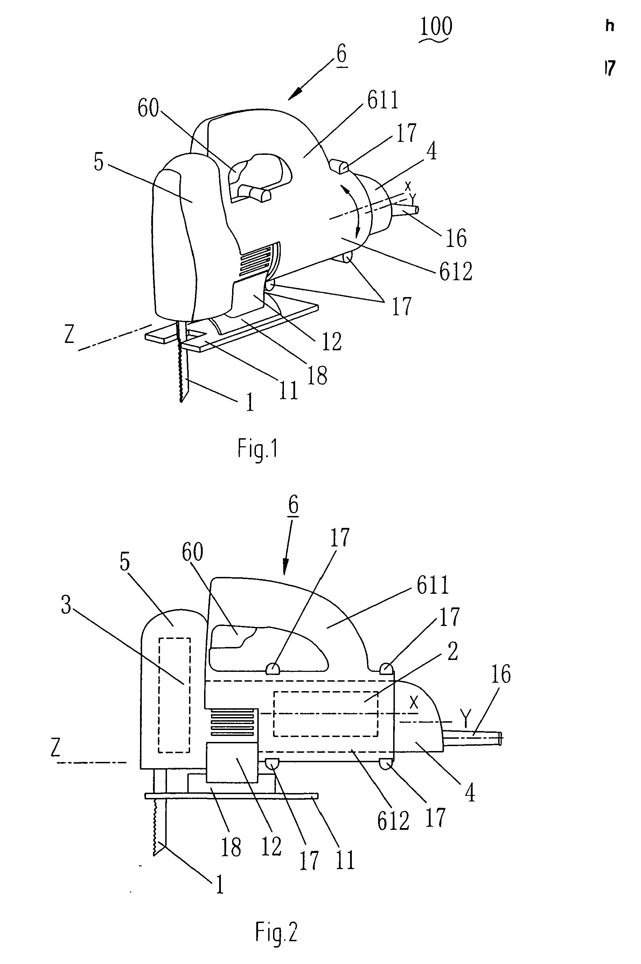

Figures 1 to 3 illustrate a first embodiment of a jigsaw of the invention designated by reference numeral 100. The jigsaw 100 comprises generally a downwardly dependent saw blade 1 for cutting a workpiece at or near to a distal end and an electric motor 2 with a rotary axis X for driving the saw blade 1 at or near to the proximal end. The electric motor 2 is powered by an electric source through electric cables 16 connected to the proximal end. The jigsaw 100 further generally comprises a transmission mechanism 3 for transferring energy from the electric motor 2 at the proximal end to the saw blade 1 at the distal end, a first housing 4 for receiving the electric motor 2, a second housing 5 for receiving the transmission mechanism 3 from which is downwardly dependent the saw blade 2, a handle assembly 6, a coupling mechanism 7, a support shoe 11 for supporting the jigsaw on the workpiece and a bracket assembly 18.

The handle assembly 6 is radially mounted on the first housing 4 by the coupling mechanism 7 and is rotatable about the axis X or about an axis Y substantially parallel to the axis X. The support shoe 11 is coupled to the first housing 4 and the second housing 5 by the bracket assembly 18. The bracket assembly 18 permits inclination of the saw blade 1 relative to the support shoe 11 and arrests it in a selected rotational position about an inclination axis Z. The bracket assembly 18 is coupled to the lower end 12 of the second housing 5 such that the first and second housing 4,5 are pivotal with respect to the support shoe 11.

The handle assembly 6 comprises a substantially D-shaped gripping portion 611 which extends into a substantially cylindrical connecting portion 612 radially mounted on the first housing 4. In the first embodiment, the handle assembly 6 comprises a left half shell 61 and a right half shell 62. Holders 17 for screws are provided for attaching the left and right half shells 61, 62 together. The electric motor 2 is electrically connected to a power source through the cables 16 by a switch 60 mounted on the gripping portion 611. The connecting portion 612 has a cutaway portion at its lower distal end. The length of the cutaway portion in the longitudinal (cutting) direction is greater than the length of the lower portion 12 of the second housing 5 in the longitudinal (cutting) direction. The angle of the cutaway portion along the circumference is about 90 degrees. The cutaway portion accommodates the lower portion 12 of the second housing 5 so that when the handle assembly 6 rotates, the lower distal end of the connecting portion 612 will not interfere with the lower portion 12 of the second housing 5. On the inner wall near to the distal end of the connecting portion 612 are symmetrically disposed protrusions 613. A flange 614 is formed on the inner wall near to the proximal end of the connecting portion 612. In the first embodiment, the length of the handle assembly 6 in the longitudinal (cutting) direction is less than the length of the first housing 4 in the longitudinal (cutting) direction. The inner height of the gripping portion 611 is less than the height of the second housing 5.

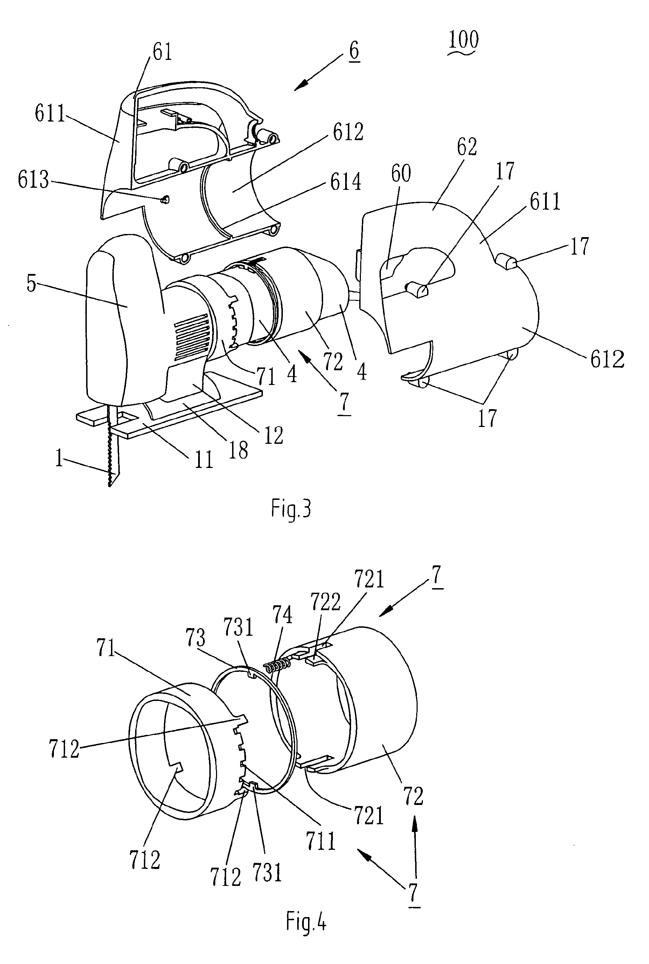

Referring to Figure 4, the coupling mechanism 7 comprises a first connecting sleeve 71, a second connecting sleeve 72, a ring 73 between the first connecting sleeve 71 and the second connecting sleeve 72 and two springs 74. The outer diameter of the first connecting sleeve 71 is the same as the outer diameter of the second connecting sleeve 72. The outer diameter of the ring 73 is less than the outer diameter of the first and second connecting sleeve 71, 72. The first connecting sleeve 71 and the second connecting sleeve 72 fit tightly on the first housing 4. The ring 73 fits loosely on the first housing 4 and can move along the first housing 4 in the longitudinal (cutting) direction.

The first connecting sleeve 71 is radially mounted on the distal end of the first housing 4. A first and second diametrically opposed group of five blind recesses 711 are arranged symmetrically at intervals on the proximal end of the first connecting sleeve 71 (only one group can be seen in Figure 4). The recesses 711 open outwardly in the radial direction and extend distally in the longitudinal (cutting) direction. At each end of each group of recesses 711, there is a delimiting stop 712 for preventing the handle assembly 6 from over-rotating.

The second connecting sleeve 72 is radially mounted on the proximal end of the first housing 4. First and second diametrically opposed receiving slots 721 are formed symmetrically at the distal end of the second connecting sleeve 72. The receiving slots 721 are through radially and extend proximally in the longitudinal (cutting) direction. A locating projection 722 is formed at each edge of the receiving slot 721. Each of a pair of diametrically opposed radial delimiting stops 731 on the inner circumferential wall of the ring 73 is interposed between the two locating projections 722.

A spring 74 is accommodated in each receiving slot 721. A first end of the spring 74 abuts the delimiting stop 731 and a second end of the spring 74 abuts the base of the receiving slot 721. The handle assembly 6 fits freely on the first and second connecting sleeve 71, 72 and is rotatable on the outer surface of the first and second connecting sleeve 71, 72. A proximal face of the flange 614 engages an opposing face of the ring 73. Under the force of the springs 74, the ring 73 urges the flange 614 distally which retains the protrusion 613 in one of the recesses 711. In this state, the handle assembly 6 is non-rotatable relative to the first housing 4. When the handle assembly 6 needs to be rotated, the operator grips the gripping portion 611 and pulls the handle assembly 6 proximally (to the right side in Figure 4) causing the flange 614 to push the ring 73 proximally. The ring 73 compresses the spring 74 and the protrusion 613 disengages the recess 711. The handle assembly 6 can then be rotated relative to the first housing 4. When the handle assembly 6 has been rotated to a desired position, the operator releases the gripping portion 611. At this time, the protrusion 613 is inserted into a recess 711 under the force of the spring 74 which makes the handle assembly 6 fixed again relative to the first housing 4.

The arrangement of the recesses 711 means that the handle assembly 6 may be fixed relative to the first and second housing 4, 5 in one of five predetermined positions. The angular range of the five predetermined positions is 0 to 50 degrees and the five predetermined positions are at 0, 5, 30, 45, and 50 degrees.

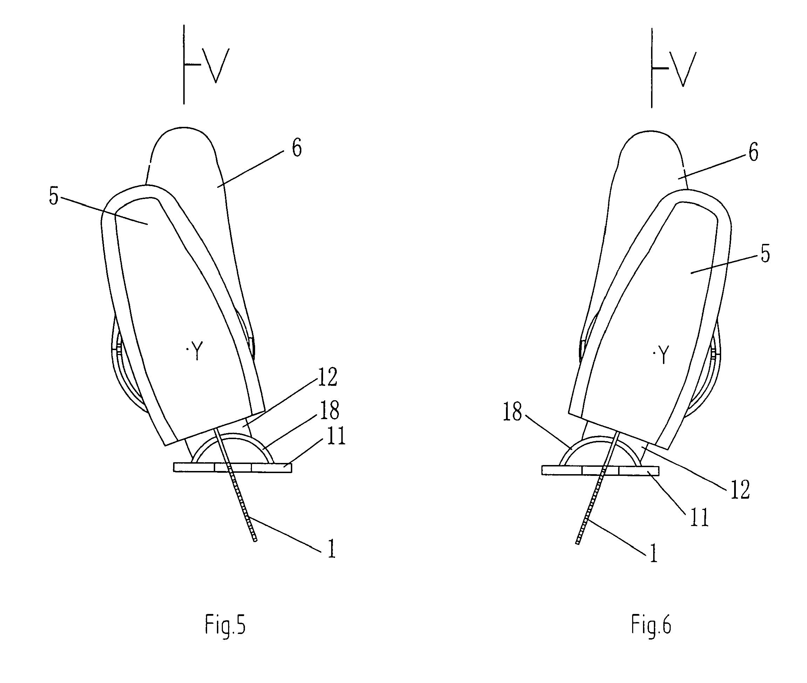

Referring to Figures 5 and 6, the operator rotates the handle assembly 6 relative to the first housing 4 and the second housing 5. The operator then rotates jigsaw 100 back to a desired and convenient position (in the present case, when the handle assembly 6 is in the vertical position V) which causes the saw blade 1 to incline relative to the support shoe 11 to leave the support shoe 11 at a certain angle to the saw blade 1 for bevel cutting.

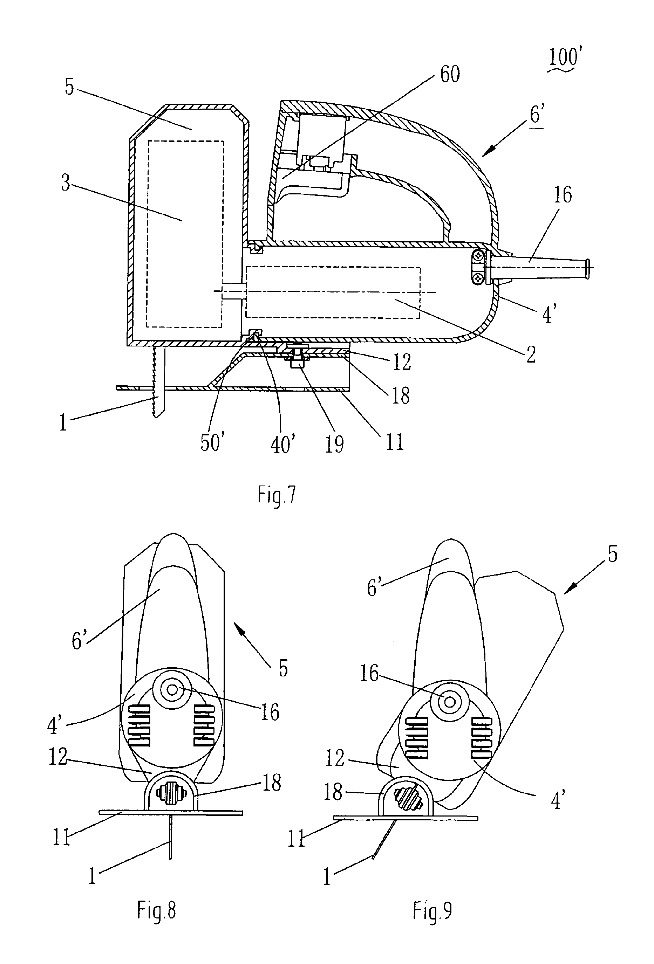

Figures 7 to 9 illustrate a second embodiment of a jigsaw of the invention designated by reference numeral 100'. Those parts which are the same as or similar to those of the first embodiment have the same numerals. The difference between the second embodiment and the first embodiment will be described in detail below.

The jigsaw 100' comprises a handle assembly 6' which is integral with a first housing 4' which contains the motor 2. The first housing 4' has a collar flange 40' formed on an inner wall at the distal end. The second housing 5 has an endless or annular lip 50' formed on the proximal end. The collar flange 40' slidably engages the endless lip 50' to mount the first housing 4' on the second housing 5 such that the first housing 4' and second housing 5' are selectively rotational.

The bracket assembly 18 (see Figure 7) has a portion which is curved. The curved portion contains a curved slot in which a selected bracket position can be chosen by means of a sliding screw 19 which can be firmly attached by a nut.

Figure 8 shows the jigsaw 100' in a first working position in which the saw blade 1 is arranged vertically with respect to the support shoe 11 and wherein the handle assembly 6' is kept in an upright position which is convenient for the operator. Figure 9 shows the jigsaw 100' in a second working position in which the saw blade 1' is inclined with respect to the support shoe 11. Again, the handle assembly 6' is kept in the "upright" position convenient for the operator. This has been achieved by rotating the integral handle assembly 6' and first housing 4' relative to the second housing 5 by sliding the collar flange 40' in the annular lip 50'.

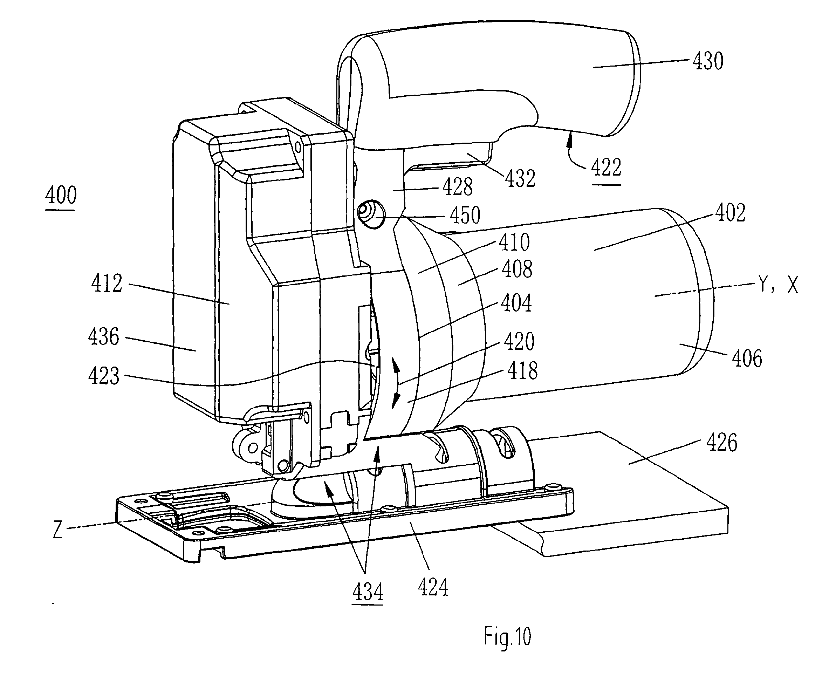

Figures 10 to 12 illustrate a third embodiment of a jigsaw of the invention designated by reference numeral 400. The jigsaw 400 comprises a first housing 402 of a substantially cylindrical shape which contains an electric motor 2. The first housing 402 has a distal end 404 and a proximal end 406. The first housing 402 has a substantially truncated conical portion 408 adjacent to a cylindrical portion 410 so that the distal end 404 of the first housing 402 has a larger outer diameter than the proximal end 406. The motor 2 is positioned substantially centrally on the longitudinal axis of the first housing 402 with a rotary axis X. The motor 2 has a motor shaft 454 supporting a motor fan 452. The motor shaft 454 is supported on a bearing 456 which in turn is supported by a second housing 412.

The second housing 412 contains a transmission device 3. The transmission device 3 transfers energy from the motor 2 to a saw blade (omitted for the sake of clarity in Figure 10) for cutting a work piece 426. The second housing 412 is essentially box shaped (cuboidal).

The proximal end of the second housing 412 is firmly attached to the distal end 404 of the first housing 402 (specifically to the distal edge of the cylindrical portion 410). A ring 418 is positioned over the proximal end of the second housing 412. The distal end of the cylindrical portion 410 is fastened to the proximal end of the second housing 412 by screws. The proximal end of the ring 418 has the same outer diameter as the second housing 412. Thus the connecting portion 442 of the second housing 412 matches the ring 418.

By means of a coupling device 423, the ring 418 can be selectively rotated (see 420) about a rotational axis Y coincident with the axis X. Rotation in any of the two directions can be arrested at any selected rotational position relative to the first and second housing 402, 412. For this purpose, the coupling device 423 comprises a securing device for arresting the handle assembly 422.

The ring 418 is part of a handle assembly 422. Viewed from the side, the handle assembly 422 has an L-configuration. The first end of the handle assembly 422 is adjacent to the second housing 412. The second end of the handle assembly 422 is free. A connection part 428 connects the rotation ring 418 to a hand grip 430. The hand grip 430 extends essentially parallel to the outer surface of the first housing 402 at some distance therefrom. The lower face of the hand grip 430 is provided with a power switch 432 for turning on and off the motor 2.

The coupling device 423 rotationally couples the handle assembly 422 to the distal end 404 of the first housing 402 to allow the handle assembly 422 to be rotated around the rotational axis Y with respect to the first and second housing 402, 412.

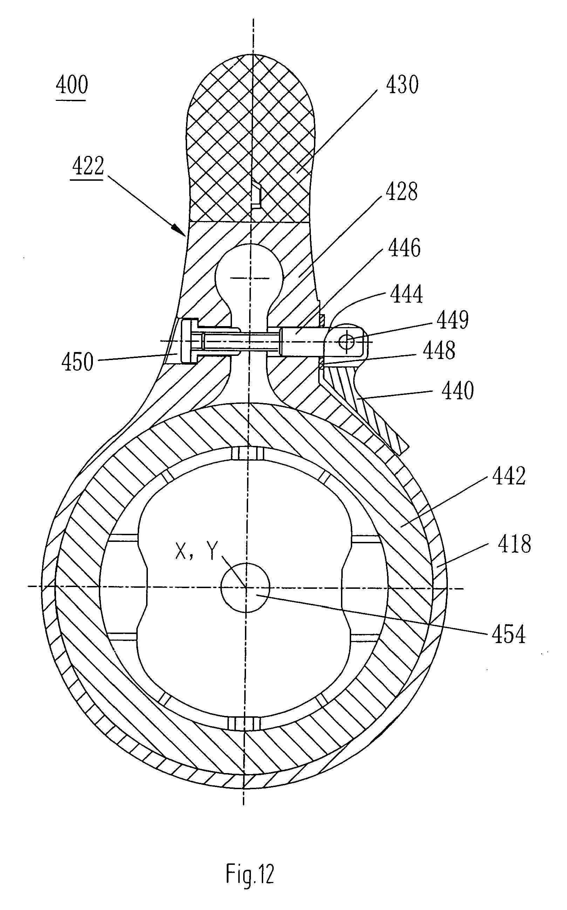

Referring specifically to Figure 12, the handle assembly 422 is secured on a connecting part 442 of the second housing 412. The securing device comprises a hole 450 formed in the connection portion 428 of the handle assembly 422. A bolt 446 goes through the hole 450. At one end of the bolt 446, there is a control lever 440 coupled via a pin 449. The control lever 440 has a cam surface 444 for engaging a washer 440 which is disposed on the bolt 446 between the connecting piece 428 and the control lever 440. By rotating the control lever 440, the rotating ring 418 can be clamped or released in any predetermined rotational position.

The lower side of the second housing 412 is connected to a bracket assembly 434 supported by a support shoe 424. Such a bracket assembly 434 is well known in the art and serves to incline the second housing 412 and the first housing 402 relative to the support shoe 424 about an inclination axis Z located a small distance above the support shoe 424. The bracket assembly 434 also makes it possible to arrest the first and second housing 402, 412 in a selected inclination position. Consequently, the jigsaw 400 can be inclined about the inclination axis Z with respect to the support shoe 424 irrespective of the rotational position with respect to the axes X, Y. A work piece 426 may be sawn when the operator has chosen a convenient position of the hand grip 430 by rotation of the handle assembly 422 around the axis Y

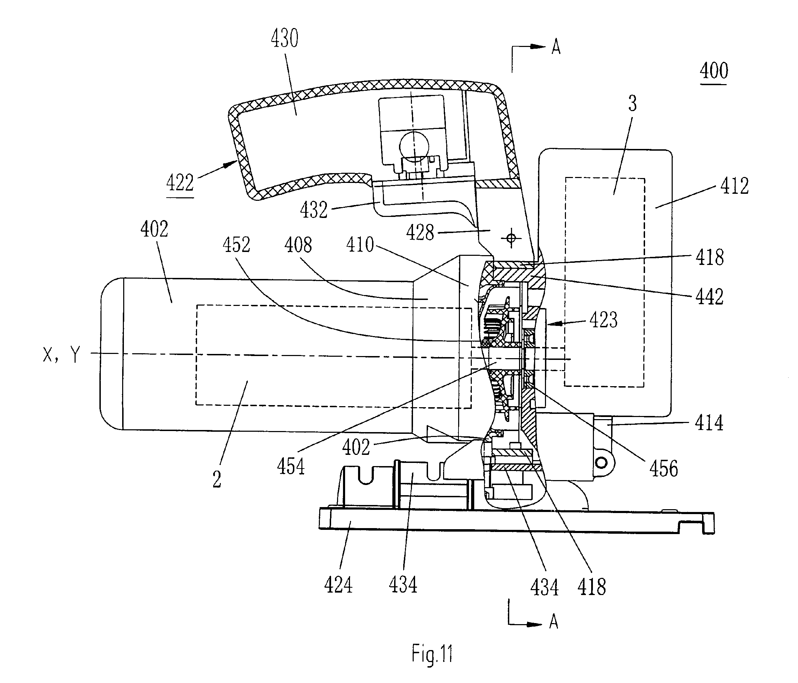

From Figure 11, it may be seen that the length of the handle assembly 422 is less than the combined length of the first housing 402 and the second housing 412. Moreover the longest dimension of the handle assembly 422 in the longitudinal (cutting) direction is less than the longest dimension of the first housing 402 in the longitudinal (cutting) direction. The handle 430 may even have a length in the longitudinal direction that is smaller than the length of the first housing 402 in the longitudinal direction.

In the embodiment of Figures 10-12, the handle assembly 422 is rotatably attached in a middle section, specifically closely to the front face 436 of the jigsaw 400. There is in use therefore only a relatively small lever function. The handle assembly 422 is supported securely and the jigsaw 400 can easily be handled by the operator.

## Claims

1. A jigsaw (100, 100', 400) comprising:
a first housing (4, 4', 402) for receiving a motor (2), wherein the motor has a rotary axis (X),
a second housing (5, 412) for receiving a transmission mechanism (3) capable of transferring energy from the motor (2) to a saw blade, wherein the second housing (5, 412) is attached to or integral with the first housing (4, 402);
a support shoe (11) attached or coupled to the first and/or second housing for supporting the jigsaw on or against a workpiece;
a bracket assembly (18) pivotally coupled to either or both of the first housing or second housing such that either or both of the first housing or second housing is pivotal relative to the support shoe about an inclination axis (Z) coincident with or parallel to the rotary axis (X) whereby to incline the second housing relative to the support shoe at an inclined position, wherein the bracket assembly is adapted to arrest the second housing at the inclined position; and
a handle assembly (6, 6', 422) for moving the jigsaw (100, 100', 400) relative to a work piece (426), wherein the handle assembly (6, 6', 422) is integral with or radially mounted on one of the first housing (4, 402) and the second housing (5, 412) and is selectively rotatable relative to at least one of the first housing (4, 402) and the second housing (5, 412).

2. A jigsaw as claimed in claim 1, wherein the longest dimension of the handle assembly (6, 6', 422) in the longitudinal direction is less than the longest dimension of the first housing (4, 402) in the longitudinal direction.

3. A jigsaw as claimed in claim 1 or 2, wherein the handle assembly (6, 6', 422) is rotatable around the rotary axis (X) or an axis (Y) which is substantially parallel to the rotary axis (X).

4. A jigsaw as claimed in any of claims 1 to 3, wherein the handle assembly (6') is integral with the first housing (4') and the handle assembly along with the first housing (4') is rotatable relative to the second housing (5).

5. A jigsaw as claimed in any of claims 1 to 3, wherein the handle assembly (6, 6', 422) is coupled to the first housing (4, 4', 402) by a coupling mechanism (7) and the handle assembly (6, 6', 422) is selectively rotatable relative to the first housing (4, 4', 402).

6. A jigsaw as claimed in claim 5, wherein the handle assembly comprises a gripping portion (611) and a connecting portion (612) coupled to the first housing.

7. A jigsaw as claimed in claim 6, wherein the gripping portion (612) is D-shaped or L-shaped.

8. A jigsaw as claimed in claim 6 or 7, wherein the cross section of the connecting portion (612) is arcuate and the inner surface of the connecting portion and the outer surface of the first housing at least partially match.

9. A jigsaw as claimed in any of claims 5 to 8, wherein the coupling mechanism (7) has a fixing device for fixing the handle assembly relative to the first housing.

10. A jigsaw as claimed in any of claims 5 to 9, wherein the coupling mechanism comprises
a first connecting sleeve (71) radially mounted on the first housing adjacent to the second housing and
a second connecting sleeve (72) radially mounted on the first housing remote from the second housing,
wherein the handle assembly comprises:
a gripping portion and
a connecting portion, wherein the connecting portion is a hollow cylinder and the inner surface of the hollow cylinder matches the outer surface of the first and second connecting sleeve such that the handle assembly is selectively moveable relative to the first and second connecting sleeve.

11. A jigsaw as claimed in claim 10, wherein the first connecting sleeve and the second connecting sleeve are integral with the first housing.

12. A jigsaw as claimed in claim 10, wherein the first connecting sleeve and the second connecting sleeve are discrete from and radially mounted on the first housing.

13. A jigsaw as claimed in any of claims 10 to 12, wherein the fixing device comprises a plurality of recesses (711) on the first connecting sleeve and a protrusion (613) on the inner surface of the hollow cylinder which selectively engages a recess of the plurality of recesses for fixing the handle assembly relative to the first housing.

14. A jigsaw as claimed in claim 13, wherein a part circumferential flange (614) is formed on the inner surface of the hollow cylinder and the coupling mechanism further comprises:
a ring (73) adajcent to a distal end of the second connecting sleeve, wherein a distal face of the ring engages the flange,
an elastic member (74) between the ring and the second connecting sleeve which is abutting a proximal face of the ring.

15. A jigsaw as claimed in claim 1, wherein the motor (2) is an electric motor or a pneumatic motor.

16. A jigsaw as claimed in any of claims 1 to 15, wherein the first housing (402) has a distal end (404) and a proximal end (406), wherein the second housing (412) is firmly attached to the distal end (404) of the first housing (402), and wherein the handle assembly (422) has a hand grip (430) and a rotation ring (418) attached to or integral with the hand grip (430), wherein the jigsaw further comprises:
a coupling device (423) for rotatably coupling the handle assembly (422) to the second housing (402) adjacent to the distal end (404) of the first housing (402) whereby the handle assembly (422) is capable of being selectively rotated around a handle rotational axis (Y) with respect to the first housing (402) and to the second housing (412).

17. A jigsaw (400) as claimed in claim 16, wherein the handle rotational axis (Y) is coincident with or parallel to the rotary axis (X).

18. A jigsaw (400) as claimed in either of claims 16 or 17, wherein the first housing (402) comprises a first and second shell attached to each other.

19. A jigsaw (400) as claimed in any of claims 16 to 18, wherein the coupling device (423) comprises:
a securing device (440, 446, 448, 449, 450) for arresting the handle assembly (422) in a selected rotational position with respect to the handle rotational axis (Y).

20. A jigsaw (400) as claimed in claim 19, wherein the securing device (440, 446, 448, 449, 450) comprises a control lever (440) having a cam surface (444).

21. A jigsaw (100, 100') comprising:
a first housing (4, 4') for receiving a motor (2), wherein the motor has a rotary axis (X),
a second housing (5) for receiving a transmission mechanism (3), wherein the transmission mechanism (3) is capable of transferring energy from the motor (2) to a saw blade, wherein the second housing (5) is attached to or integral with the first housing (4,4');
a support shoe (11) attached or coupled to the first and/or second housing for supporting the jigsaw on or against a workpiece;
a bracket assembly (18) pivotally coupled to either or both of the first housing or second housing such that either or both of the first housing or second housing is pivotal relative to the support shoe about an inclination axis (Z) coincident with or parallel to the rotary axis (X) whereby to incline the second housing relative to the support shoe at an inclined position, wherein the bracket assembly is adapted to arrest the second housing at the inclined position; and
a handle assembly (6, 6') for moving the jigsaw (100, 100') relative to a work piece, wherein the handle assembly has a first end and a second end,
wherein the first end and the second end of the handle assembly (6, 6') are mounted on the first housing (4, 4') and the handle assembly (6, 6') is selectively rotatable relative to at least one of the first housing (4, 4') and the second housing (5).

22. A jigsaw (400) comprising:
a first housing (402) for receiving a motor (2), wherein the motor has a rotary axis (X),
a second housing (412) for receiving a transmission mechanism (3), wherein the transmission mechanism (3) is capable of transferring energy from the motor (2) to a saw blade, wherein the second housing (412) is attached to or integral with the first housing (402);
a support shoe (11) attached or coupled to the first and/or second housing for supporting the jigsaw on or against a workpiece;
a bracket assembly (18) pivotally coupled to either or both of the first housing or second housing such that either or both of the first housing or second housing is pivotal relative to the support shoe about an inclination axis (Z) coincident with or parallel to the rotary axis (X) whereby to incline the second housing relative to the support shoe at an inclined position, wherein the bracket assembly is adapted to arrest the second housing at the inclined position; and
a handle assembly (422) for moving the jigsaw (400) relative to a work piece (426), wherein the handle assembly has a first end and a second end;
wherein the first end of the handle assembly (422) is supported on one of the first housing (402) or the second housing (412), wherein the second end of the handle assembly (412) is a free end, and wherein, the handle assembly (422) is selectively rotatable relative to at least one of the first housing (402) and the second housing (412).
